# EUROPÄISCHE PATENTANMELDUNG

(11) **EP 2 995 517 A1**
(43) Veröffentlichungstag der Anmeldung: **16.03.2016**
(21) Anmeldenummer: 15173967.9
(22) Anmeldetag: 26.06.2015
(51) Int. Cl.: B60T 10/02

(54) **DAUERBREMSEINRICHTUNG FÜR EINEN ANTRIEBSSTRANG EINES KRAFTFAHRZEUGES**

(30) Priorität: 25.07.2014 DE 102014214723
(71) Anmelder: ZF Friedrichshafen AG, 88046 Friedrichshafen (DE)
(72) Erfinder: WOELFLE, Bernd, 88074 Meckenbeuren (DE)

(57) **Zusammenfassung**

Die Erfindung betrifft eine Dauerbremseinrichtung (1) für einen Antriebsstrang eines Kraftfahrzeuges, umfassend mindestens einen einem Kraftfahrzeuggetriebe nachgeschalteten Retarder, welcher über je eine zwischenliegende Hochtreiberstufe (14) an eine abtriebsseitige Komponente des Kraftfahrzeuggetriebes angebunden ist. Um nun eine Einbindung eines oder mehrerer Retarder bei kompaktem Aufbau zu realisieren, umfasst die je eine Hochtreiberstufe (14) ein Abtriebsrad (15), welches drehfest mit der abtriebsseitigen Komponente verbunden ist und mit einem Zwischenrad (16) im Zahneingriff steht, das wiederum mit je einem auf jeweils einer Antriebswelle (19, 20) des mindestens einen Retarders platzierten Antriebsrad (17, 18) kämmt.

## Beschreibung

Die Erfindung betrifft eine Dauerbremseinrichtung für einen Antriebsstrang eines Kraftfahrzeuges, umfassend mindestens einen einem Kraftfahrzeuggetriebe nachgeschalteten Retarder, welcher über je eine zwischenliegende Hochtreiberstufe an eine abtriebsseitige Komponente des Kraftfahrzeuggetriebes angebunden ist. Des Weiteren betrifft die Erfindung einen Antriebsstrang eines Kraftfahrzeuges, welcher eine vorgenannte Dauerbremseinrichtung aufweist.

Dauerbremseinrichtungen kommen bei Kraftfahrzeugen insbesondere im Bereich der Nutzfahrzeuge als verschleißfreie Bremsen zur Anwendung und dienen dort besonders im Zuge von langanhaltenden Bremsmanövern der Entlastung einer jeweiligen Betriebsbremse. Zum überwiegenden Teil wird eine verschleißfreie Dauerbremse hierbei als hydrodynamischer Retarder ausgeführt, welcher dann über eine Hochtreiberstufe in den jeweiligen Kraftfahrzeugantriebsstrang eingebunden ist, um eine hohe Drehzahl eines Rotors des Retarders und damit eine ausreichende Bremswirkung darstellen zu können. Zumeist ist eine Retarderhochtreiberstufe dabei als Stirnradstufe realisiert, über welche eine Welle des Antriebsstranges unter Übersetzung ins Schnelle mit der Retarderwelle des Retarders gekoppelt ist. Abgesehen davon kommen Retarderhochtreiberstufen jedoch auch in anderweitigen Ausführungen zur Anwendung.

Aus der DE 43 24 460 C1 geht eine Dauerbremseinrichtung für einen Antriebsstrang eines Kraftfahrzeuges hervor, bei welcher ein hydrodynamischer Retarder einer Bereichsgruppe eines in Gruppenbauweise ausgeführten Kraftfahrzeuggetriebes nachgeschaltet ist. Die Bereichsgruppe des Kraftfahrzeuggetriebes ist in Planetenbauweise mit einer Planetenstufe ausgeführt, wobei der Retarder mit einem Planetensteg dieser Planetenstufe gekoppelt ist, welcher die abtriebsseitige Komponente der Planetenstufe bildet. Die Einbindung des Retarders erfolgt dabei über eine zwischenliegende Hochtreiberstufe, welche ebenfalls als Planetenstufe realisiert ist und eine Drehbewegung des Planetenträgers der Bereichsgruppe ins Schnelle auf einen Rotor des hydrodynamischen Retarders übersetzt.

Ausgehend vom vorstehend beschriebenen Stand der Technik ist es nun die Aufgabe der vorliegenden Erfindung, eine Dauerbremseinrichtung für einen Antriebsstrang eines Kraftfahrzeuges zu schaffen, bei welcher eine Einbindung ein oder auch mehrerer Retarder bei kompaktem Aufbau problemlos realisiert werden kann.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Kraftfahrzeugantriebsstrang, bei welchem eine vorgenannte Dauerbremseinrichtung zur Anwendung kommt, geht ferner aus Anspruch 10 hervor.

Gemäß der Erfindung umfasst eine Dauerbremseinrichtung mindestens einen einem Kraftfahrzeuggetriebe nachgeschalteten Retarder, welcher über je eine zwischenliegende Hochtreiberstufe an eine abtriebsseitige Komponente des Kraftfahrzeuggetriebes angebunden ist. Im Sinne der Erfindung handelt es sich bei dem Kraftfahrzeuggetriebe insbesondere um ein Gruppengetriebe, wobei der mindestens eine Retarder dabei bevorzugt abtriebsseitig einer in Planetenbauweise ausgeführten Bereichsgruppe vorgesehen und über die Hochtreiberstufe an eine abtriebsseitige Komponente einer Planetenstufe dieser Bereichsgruppe angebunden ist. In diesem Fall können der Bereichsgruppe dann ein oder auch mehrere, weitere Gruppengetriebe vorgeschaltet sein, welche ggf. ebenfalls in Planetenbauweise ausgeführt sind oder aber sich aus Stirnradstufen zusammensetzen. Alternativ dazu kann das Kraftfahrzeuggetriebe aber auch als Einzelgetriebe oder als Getriebegruppe eines übergeordneten Getriebes vorliegen, wobei im letztgenannten Fall dann weitere Getriebegruppen nachgeschaltet sein können, der mindestens eine Retarder also zwischen Getriebegruppen eingebunden ist.

Die Erfindung umfasst nun die technische Lehre, dass die je eine Hochtreiberstufe ein Abtriebsrad aufweist, welches drehfest mit der abtriebsseitigen Komponente verbunden ist und mit einem Zwischenrad im Zahneingriff steht, das wiederum mit je einem auf einer Antriebswelle des mindestens einen Retarders platzierten Antriebsrad kämmt. Mit anderen Worten ist bei der je einen Hochtreiberstufe also ein Abtriebsrad vorgesehen, welches gemeinsam mit der abtriebsseitigen Komponente rotiert und mit einem Zwischenrad im Zahneingriff steht. Das Zwischenrad wiederum kämmt mit je einem Antriebsrad für den mindestens einen Retarder, welches auf einer Antriebswelle des Retarders vorgesehen ist.

Eine derartige Ausgestaltung einer Dauerbremseinrichtung hat dabei den Vorteil, dass durch die beiden Zahneingriffe, also zum einen der Zahneingriff zwischen Abtriebsrad und Zwischenrad, sowie zum anderen der Zahneingriff zwischen Zwischenrad und Antriebsrad, problemlos eine geeignete Übersetzung für den mindestens einen Retarder dargestellt werden kann. Ferner können auch mehrere Retarder auf einfache Art und Weise eingebunden werden, indem entsprechende Antriebsräder und ggf., je nach Anordnung der einzelnen Retarder, auch entsprechende Zwischenräder vorgesehen werden. Ein gemeinsamer Antrieb erfolgt dabei über das mit der abtriebsseitigen Komponente drehfest verbundene Abtriebsrad, so dass ein Antrieb mehrerer Retarder bei geringem Bau- und auch Herstellungsaufwand möglich ist.

Hingegen ist im Falle der DE 43 24 460 C1 eine Einbindung des Retarders über eine als Planetenstufe gestaltete Hochtreiberstufe realisiert, was zwar auch eine Einbindung auf kompakte Art und Weise bei Darstellung einer geeigneten Übersetzung ermöglicht, aber nicht für die Einbindung mehrerer Retarder geeignet ist.

Das Abtriebsrad, das Zwischenrad und das je eine Antriebsrad sind im Sinne der Erfindung bevorzugt jeweils als Stirnräder ausgeführt, welche über Schrägverzahnungen untereinander im Zahneingriff stehen. Prinzipiell kommen aber auch anderweitige Gestaltungen der Räder in Betracht, beispielsweise eine Ausführung als Kegelräder, um einen Achsversatz zwischen Abtriebsrad und dem je einen Antriebsrad zu ermöglichen.

Entsprechend einer Ausführungsform der Erfindung sind mehrere Retarder vorgesehen, deren Antriebsräder jeweils mit einem gemeinsamen Zwischenrad im Zahneingriff stehen, das mit ebenfalls einem gemeinsamen mit der abtriebsseitigen Komponente verbundenen Abtriebsrad kämmt. Hierdurch können mehrere, insbesondere kleinbauende Retarder auf kompakte Art und Weise abtriebsseitig des Kraftfahrzeuggetriebes vorgesehen werden, wobei diese Retarder dann gemeinsam über das Abtriebsrad, sowie das Zwischenrad antreibbar sind und für die verschleißfreie Erzeugung eines entsprechenden Bremsmoments sorgen. Alternativ dazu können aber auch mehrere Zwischenräder vorgesehen sein, welche jeweils mit einem oder mehreren Antriebsrädern zugehöriger Retarder kämmen.

In Weiterbildung der Erfindung weist eine das Zwischenrad tragende Welle und/oder die jeweils eine Antriebswelle jeweils einen Anschluss für einen Nebenabtrieb auf. Eine derartige Ausgestaltung hat dabei den Vorteil, dass über den oder die mehreren Nebenabtriebe weitere Komponenten der Dauerbremseinrichtung angetrieben werden können, wie beispielsweise eine oder mehrere den mindestens Retarder versorgende Pumpen. Dabei ist zudem eine kompakte Einbindung dieser weiteren anzutreibenden Komponenten möglich.

Gemäß einer weiteren Ausgestaltungsmöglichkeit der Erfindung ist der mindestens eine Retarder als hydrodynamischer Retarder ausgeführt. Besonders bevorzugt ist ein hydrodynamischer Retarder dabei auf eine dem Fachmann prinzipiell bekannte Art und Weise aufgebaut, indem ein Rotor und ein Stator vorgesehen sind, welche jeweils mit je einer Beschaufelung ausgestattet sind und dabei zwischen sich einen insbesondere torusförmig gestalteten Arbeitsraum definieren. Für einen Bremsbetrieb des Retarders kann dann eine Flüssigkeit, bevorzugt in Form von Öl oder Wasser, in den Arbeitsraum eingebracht werden, wobei diese Flüssigkeit dann durch die Beschaufelung des drehenden Rotors mitgenommen und in Richtung der Beschaufelung des stillstehenden Stators gefördert wird. Dort stützt sich die Flüssigkeit ab und wird wiederum zurück zum Rotor geleitet, was verzögernd auf diesen und dementsprechend auch auf die mit diesem verbundene Antriebswelle wirkt.

Alternativ zu dieser allgemein bekannten Ausgestaltung kann sich der mindestens eine hydrodynamische Retarder aber auch aus je zwei Rotoren zusammensetzen, von welchen der jeweils eine Rotor auf der Antriebswelle angeordnet und der jeweils andere Rotor mit einer antriebsseitigen Komponente oder der abtriebsseitigen Komponente gekoppelt ist. Weiter bevorzugt ist der jeweils andere Rotor dabei auf je einer Welle platziert, welche jeweils ein Stirnrad trägt, das mit einem drehfest mit der antriebsseitigen oder der abtriebsseitigen Komponente verbundenen Zahnrad kämmt. Sind dann mehrere Retarder vorgesehen, so ist es eine weitere, vorteilhafte Ausführungsform der Erfindung, dass die mit den jeweils anderen Rotoren der mehreren Retarder drehfest verbundenen Stirnräder mit einem gemeinsamen Zahnrad kämmen, das mit der antriebsseitigen oder der abtriebsseitigen Komponente verbunden ist.

Der Aufbau des mindestens einen hydrodynamischen Retarders mit zwei Rotoren ermöglicht dabei unterschiedliche Gestaltungen eines Bremsmoments, je nachdem unter welchen Relativdrehzahlen die beiden Rotoren zueinander laufen. So kann bei einer Anbindung des jeweils anderen Rotors an einer antriebsseitigen Komponente der Getriebegruppe oder des Einzelgetriebes die Darstellung einer der Anzahl an Gängen der Getriebegruppe oder des Einzelgetriebes entsprechenden Anzahl an Bremsmomenten realisiert werden. Die Einbindung des jeweils anderen Rotors kann dabei über die Stirnräder ebenfalls auf kompakte Art und Weise erfolgen, wobei im Falle der Anordnung mehrerer derartiger hydrodynamischer Retarder die gemeinsame Nutzung des antriebsseitig bzw. abtriebsseitig angebundenen Zahnrades eine entsprechende Reduzierung an Bauteilen bewirkt. Bei Koppelung mit einer antriebsseitigen Komponente handelt es sich bei dieser Komponente insbesondere um den Teil einer in Planetenbauweise ausgeführten Bereichsgruppe, besonders bevorzugt um das Sonnenrad einer Planetenstufe dieser Bereichsgruppe.

Alternativ oder auch ergänzend zu dem im Vorfeld Beschriebenen ist der mindestens eine Retarder als hydrostatischer Retarder ausgeführt, also insbesondere in Form einer hydrostatischen Pumpe. Im Sinne der Erfindung kann es sich dabei um eine verstellbare Pumpe, besonders bevorzugt in Form einer Pendelschieberpumpe, handeln. Bei Vorsehen mehrerer Retarder können diese Retarder dann jeweils als hydrostatische Retarder ausgeführt sein oder aber auch eine Mischung aus hydrodynamischen und hydrostatischen Retardern vorliegen. Ferner ist es im Sinne der Erfindung prinzipiell auch denkbar, anderweitige Formen von Retardern, wie beispielsweise elektrodynamische Retarder, vorzusehen.

In Weiterbildung der Erfindung sind mehrere Retarder vorgesehen, wobei einem Retarder je ein weiterer Retarder nachgeschaltet ist. So kann beispielsweise bei einem herkömmlichen Retarder oder auch einem aus zwei Rotoren bestehenden Retarder an einer Welle ein weiterer Retarder angebunden sein, bei welchem es sich dann um einen hydrodynamischen oder auch hydrostatischen Retarder handeln kann. Es ist jedoch auch denkbar, dass einem als hydrostatischen Retarder gestalteten Retarder ein hydrodynamischer oder hydrostatischer Retarder nachgeschaltet ist, indem eine durch die jeweilige hydrostatische Pumpe hindurchgeführte Antriebswelle zudem als Antriebswelle für den hydrodynamischen bzw. den hydrostatischen Retarder dient.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausgestaltungen der Erfindung, die nachfolgend erläutert werden, sind in den Zeichnungen dargestellt. Es zeigt:
- Fig. 1: eine schematische Ansicht einer Dauerbremseinrichtung entsprechend einer ersten Ausführungsform der Erfindung;
- Fig. 2: eine weitere Ansicht der Dauerbremseinrichtung aus Fig. 1;
- Fig. 3: eine schematische Darstellung einer Dauerbremseinrichtung gemäß einer zweiten Ausgestaltungsmöglichkeit der Erfindung;
- Fig. 4: eine schematische Ansicht einer Dauerbremseinrichtung entsprechend einer dritten Ausführungsform der Erfindung;
- Fig. 5: eine schematische Darstellung einer Dauerbremseinrichtung entsprechend einer vierten Ausgestaltungsmöglichkeit der Erfindung;
- Fig. 6: eine schematische Ansicht einer Dauerbremseinrichtung gemäß einer fünften Ausführungsform der Erfindung; und
- Fig. 7: eine schematische Darstellung einer Dauerbremseinrichtung entsprechend einer sechsten Ausgestaltungsmöglichkeit der Erfindung.

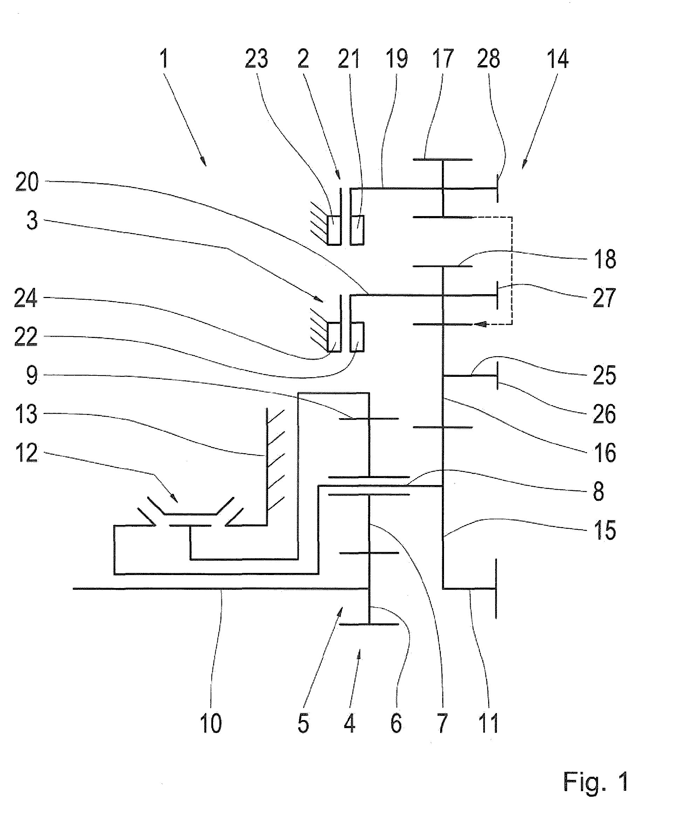

Aus Fig. 1 geht eine schematische Ansicht einer Dauerbremseinrichtung 1 entsprechend einer ersten Ausführungsform der Erfindung hervor, wobei diese Dauerbremseinrichtung 1 dabei für die Anwendung in einem Antriebsstrang eines Nutzfahrzeuges vorgesehen ist. Innerhalb der Dauerbremseinrichtung 1 sind hierbei zwei hydrodynamische Retarder 2 und 3 einer Bereichsgruppe 4 eines - ansonsten nicht weiter dargestellten - Kraftfahrzeuggetriebes des Nutzfahrzeuges als Sekundärretarder nachgeschaltet.

Das vorliegend nicht weiter im Detail zu sehende Kraftfahrzeuggetriebe ist in Gruppenbauweise ausgestaltet und kann neben der Bereichsgruppe 4 weitere, der Bereichsgruppe 4 vorgeschaltete Getriebegruppen umfassen, wie eine Hauptgruppe und/oder eine Splitgruppe. Die Bereichsgruppe 4 des Kraftfahrzeuggetriebes ist in Planetenbauweise ausgeführt und setzt sich aus einer Planetenstufe 5 zusammen, welche als Minusplanetenradsatz vorliegt. Insofern kämmt ein radial innenliegendes Sonnenrad 6 mit einem oder mehreren Planetenrädern 7, die über einen gemeinsamen Planetenträger 8 geführt werden und jeweils mit einem radial umliegenden Hohlrad 9 im Zahneingriff stehen.

Das Sonnenrad 6 bildet eine antriebsseitige Komponente der Planetenstufe 5 und ist demzufolge auf einer Eingangswelle 10 der Bereichsgruppe 4 aufgesetzt, über welche die Bereichsgruppe 4 mit der vorhergehenden Getriebegruppe in Verbindung steht. Hingegen bildet der Planetenträger 8 eine abtriebsseitige Komponente der Planetenstufe 5, indem dieser drehfest mit einer koaxial zur Eingangswelle 10 verlaufenden Ausgangswelle 11 gekoppelt ist. Ferner können zwei unterschiedliche Übersetzungsverhältnisse der Bereichsgruppe 4 dargestellt werden, indem das Hohlrad 9 mit Hilfe einer Schalteinrichtung 12, die vorliegend durch Sperrsynchronisationen gebildet ist, einerseits an einem Gehäuse 13 festgesetzt, sowie andererseits mit dem Planetenträger 8 und damit der Ausgangswelle 11 gekoppelt werden kann.

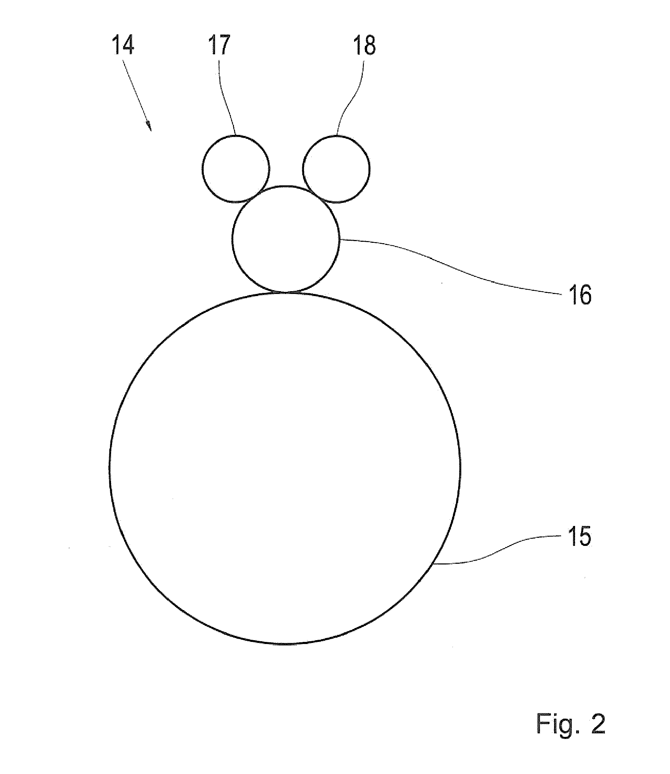

Die beiden hydrodynamischen Retarder 2 und 3 sind nun mit dem Planetenträger 8 und damit der abtriebsseitigen Komponente der Planetenstufe 5 über eine zwischenliegende Hochtreiberstufe 14 gekoppelt. Diese Hochtreiberstufe setzt sich dabei aus einem drehfest mit dem Planetenträger 8 und damit auch der Ausgangswelle 11 verbundenen Abtriebsrad 15 zusammen, das mit einem Zwischenrad 16 im Zahneingriff steht, wobei das Zwischenrad 16 wiederum mit zwei Antriebsrädern 17 und 18 kämmt, wie insbesondere aus der weiteren Ansicht in Fig. 2 zu erkennen ist, welche eine Ansicht der Radebene der Hochtreiberstufe 14 zeigt.

Die Antriebsräder 17 und 18 sind dann jeweils auf je einer Antriebswelle 19 bzw. 20 des jeweiligen Retarders 2 bzw. 3 platziert, mit welcher dann ein jeweiliger Rotor 21 bzw. 22 des jeweiligen hydrodynamischen Retarders 2 bzw. 3 verbunden ist. Der jeweilige Rotor 21 bzw. 22 bildet gemeinsam mit einem zugeordneten Stator 23 bzw. 24 einen - vorliegend weiter nicht dargestellten - Arbeitsraum aus, in welchen für einen Bremsbetrieb auf dem Fachmann prinzipiell bekannte Art und Weise Flüssigkeit eingebracht werden kann. Wie zudem aus Fig. 1 zu erkennen ist, bildet sowohl eine das Zwischenrad 16 tragende Welle 25, als auch die Antriebswellen 19 und 20 jeweils Anschlüsse 26, 27 und 28 für Nebenabtriebe aus, an welchen beispielsweise je eine Pumpe zur Versorgung der hydrodynamischen Retarder 2 und 3 angeschlossen werden können.

Im Endeffekt wird über die Hochtreiberstufe 14 eine Drehbewegung des Planetenträgers 8 ins Schnelle auf die beiden Antriebswellen 19 und 20 der Retarder 2 und 3 übersetzt, wobei dies innerhalb einer Radebene und unter Verwendung weniger Bauteile erfolgt.

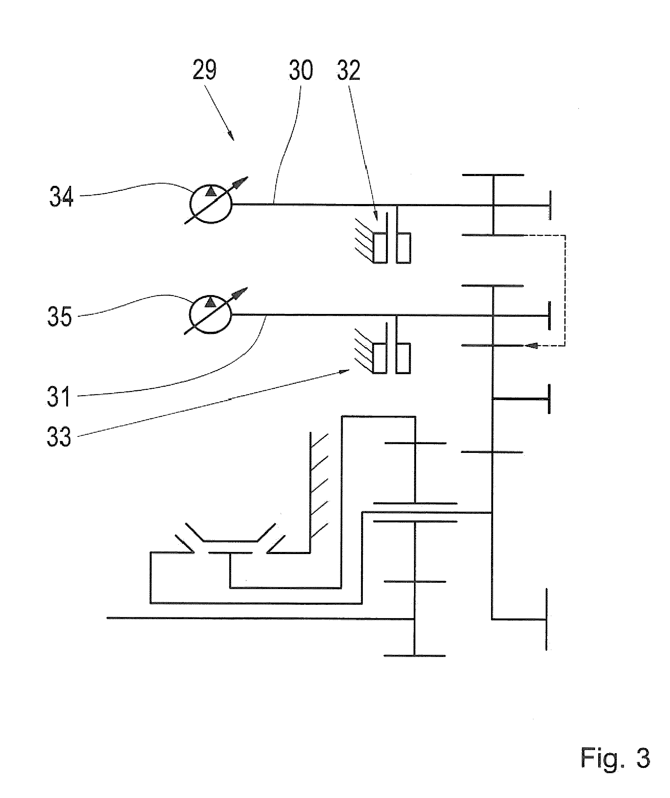

Des Weiteren geht aus Fig. 3 eine schematische Ansicht einer Dauerbremseinrichtung 29 gemäß einer zweiten Ausgestaltungsmöglichkeit der Erfindung hervor, wobei diese im Wesentlichen der Variante nach Fig. 1 entspricht. Einziger Unterschied ist dabei, dass Antriebswellen 30 und 31 zweier hydrodynamischer Retarder 32 und 33 verlängert sind und gleichzeitig als Antriebswellen für weitere, nachgeschaltete Retarder in Form zweier hydrostatischer Retarder 34 und 35 fungieren. Dabei liegen diese hydrostatischen Retarder 34 und 35 als verstellbare Pumpen in Form von Pendelschieberpumpen vor. Im Übrigen entspricht die Ausgestaltung nach Fig. 3 der Variante nach Fig. 1, so dass auf das hierzu Beschriebene Bezug genommen wird.

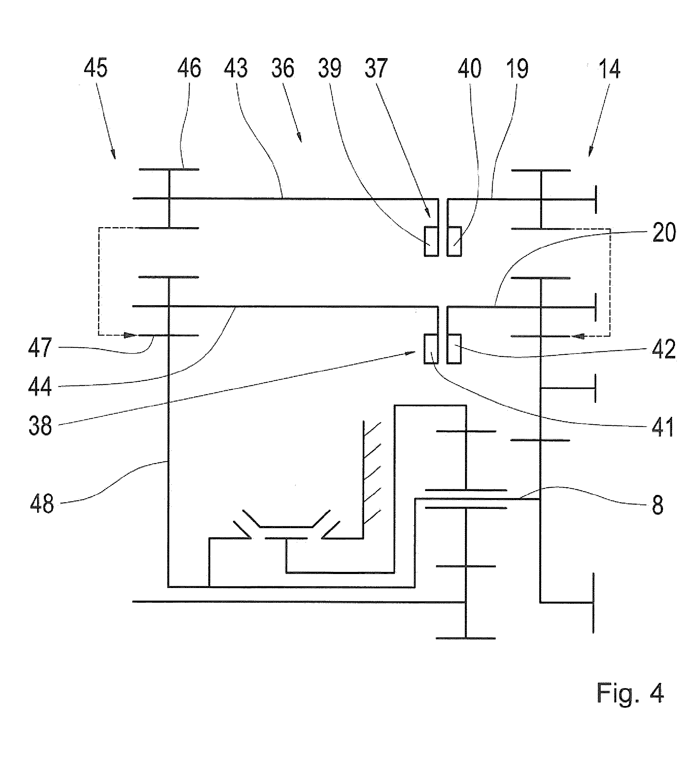

Aus Fig. 4 geht ferner eine schematische Ansicht einer Dauerbremseinrichtung 36 gemäß einer dritten Ausführungsform der Erfindung hervor, wobei diese wiederum im Wesentlichen der Variante nach Fig. 1 entspricht. Im Unterschied dazu sind bei der Dauerbremseinrichtung 36 allerdings zwei hydrodynamische Retarder 37 und 38 vorgesehen, welche - abweichend von einer herkömmlichen Gestaltung - aus je zwei Rotoren 39 und 40 bzw. 41 und 42 bestehen. Die Rotoren 40 und 42 sind dabei auf den mit der Hochtreiberstufe 14 verbundenen Antriebswellen 19 und 20 angeordnet, während die Rotoren 39 und 41 jeweils auf je einer zugehörigen Welle 43 bzw. 44 platziert sind. Wie aus Fig. 4 zu erkennen ist, sind die Wellen 43 und 44 dabei über eine Hochtreiberstufe 45 mit dem Planetenträger 8 gekoppelt, indem jede der Wellen 43 und 44 je ein Stirnrad 46 bzw. 47 trägt, wobei beide Stirnräder 46 und 47 mit einem gemeinsamen Zahnrad 48 im Zahneingriff stehen, das drehfest mit dem Planetenträger 8 verbunden ist. Bei den hydrodynamischen Retardern 37 und 38 wird ein jeweils erzeugtes Bremsmoment durch die Relativdrehzahl der beiden Rotoren 39 und 40 bzw. 41 und 42 zueinander definiert. Im Übrigen entspricht die Ausgestaltung der Variante nach Fig. 1, so dass auf das hierzu Beschriebene Bezug genommen wird.

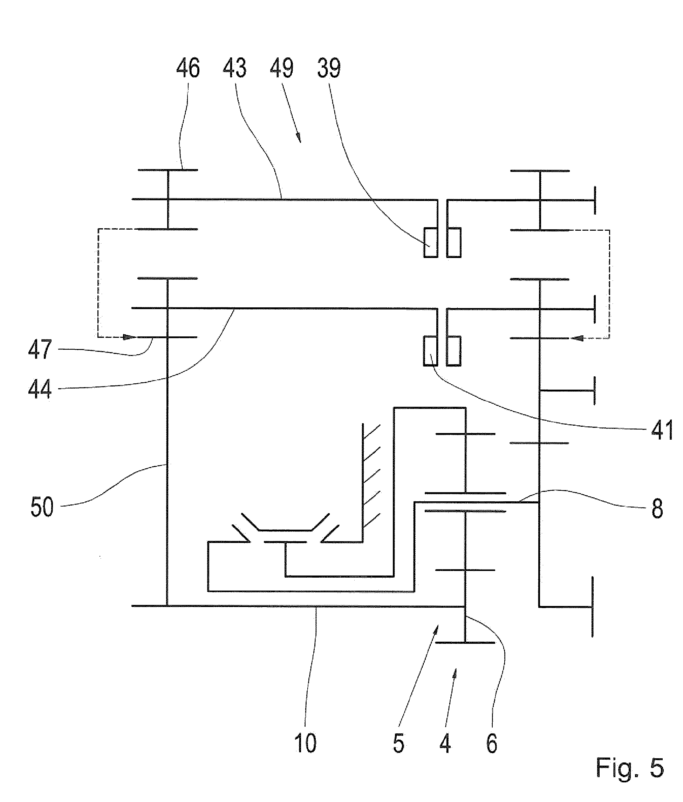

Ferner geht aus Fig. 5 eine Dauerbremseinrichtung 49 gemäß einer vierten Ausgestaltungsmöglichkeit der Erfindung hervor, wobei diese Ausgestaltung dabei im Wesentlichen der Variante nach Fig. 4 entspricht. Einziger Unterschied ist dabei, dass die Wellen 43 und 44 der Rotoren 39 und 41 nicht mit dem Planetenträger 8, sondern mit der Eingangswelle 10 und dem Sonnenrad 6 gekoppelt sind, indem ein mit den Stirnrädern 46 und 47 kämmendes Zahnrad 50 drehfest auf der Eingangswelle 10 platziert ist. Durch die Anbindung der Wellen 43 und 44 an die antriebsseitige Komponente der Planetenstufe 5 können entsprechend der beiden darstellbaren Übersetzungsverhältnisse der Bereichsgruppe 4 voneinander abweichende Verläufe eines Bremsmoments generiert werden. Im Übrigen entspricht die Ausgestaltung nach Fig. 5 sonst der Variante nach Fig. 4, so dass auf das hierzu Beschriebene Bezug genommen wird.

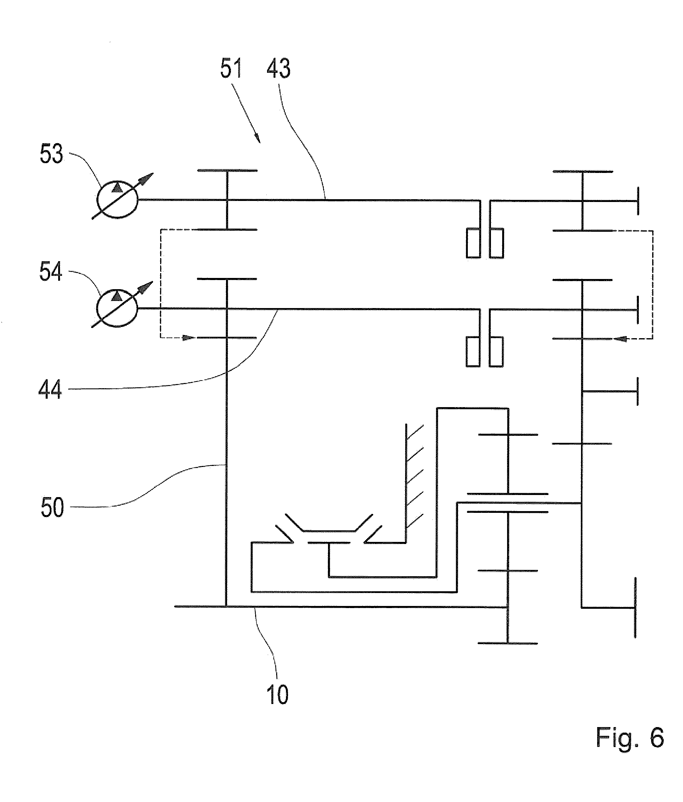

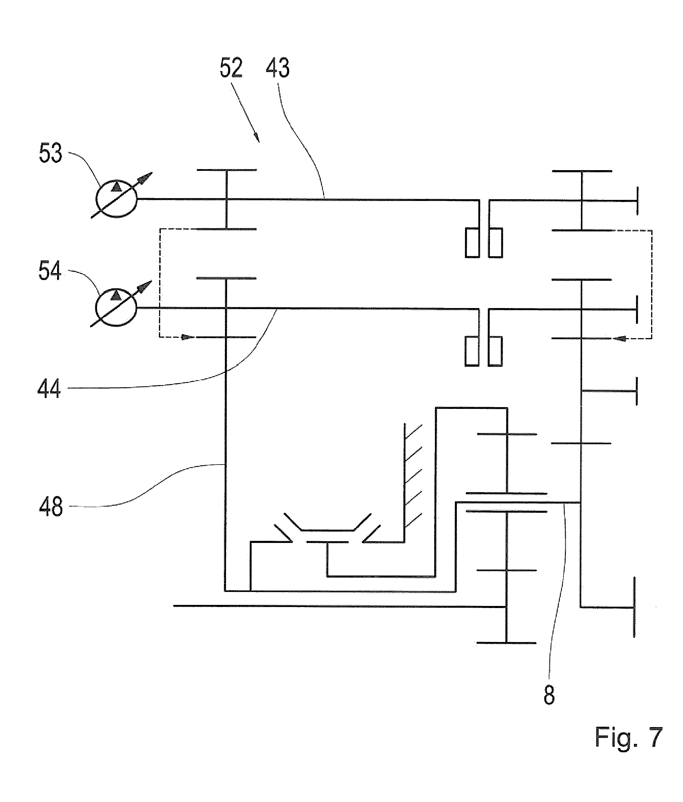

Schließlich gehen aus den Fig. 6 und 7 noch schematische Ansichten zweier weiterer Varianten von Dauerbremseinrichtungen 51 bzw. 52 hervor, wobei diese den Varianten nach Fig. 4 und Fig. 5 im Wesentlichen nachempfunden sind, mit dem Unterschied, dass die Wellen 43 und 44 jeweils noch als Antrieb für je einen hydrostatischen Retarder 53 bzw. 54 fungieren. Dabei sind die hydrostatischen Retarder 53 und 54 wiederum als verstellbare Pumpen in Form von Pendelschieberpumpen ausgeführt. Bei der Dauerbremseinrichtung 51 aus Fig. 6 erfolgt dann wiederum eine Anbindung der Wellen 43 und 44 an die Eingangswelle 10, während im Falle der Dauerbremseinrichtung 52 analog zu der Variante nach Fig. 4 eine Koppelung der Wellen 43 und 44 mit dem Planetenträger 8 realisiert ist.

Mittels der erfindungsgemäßen Ausgestaltungen einer Dauerbremseinrichtung kann eine Einbindung eines oder mehrerer Retarder auf kompakte Art und Weise und bei Darstellung einer geeigneten Übersetzung realisiert werden.

### Bezugszeichen

- 1: Dauerbremseinrichtung
- 2: Hydrodynamischer Retarder
- 3: Hydrodynamischer Retarder
- 4: Bereichsgruppe
- 5: Planetenstufe
- 6: Sonnenrad
- 7: Planetenrad
- 8: Planetenträger
- 9: Hohlrad
- 10: Eingangswelle
- 11: Ausgangswelle
- 12: Schalteinrichtung
- 13: Gehäuse
- 14: Hochtreiberstufe
- 15: Abtriebsrad
- 16: Zwischenrad
- 17: Antriebsrad
- 18: Antriebsrad
- 19: Antriebswelle
- 20: Antriebswelle
- 21: Rotor
- 22: Rotor
- 23: Stator
- 24: Stator
- 25: Welle
- 26: Anschluss
- 27: Anschluss
- 28: Anschluss
- 29: Dauerbremseinrichtung
- 30: Antriebswelle
- 31: Antriebswelle
- 32: Hydrodynamischer Retarder
- 33: Hydrodynamischer Retarder
- 34: Hydrostatischer Retarder
- 35: Hydrostatischer Retarder
- 36: Dauerbremseinrichtung
- 37: Hydrodynamischer Retarder
- 38: Hydrodynamischer Retarder
- 39: Rotor
- 40: Rotor
- 41: Rotor
- 42: Rotor
- 43: Welle
- 44: Welle
- 45: Hochtreiberstufe
- 46: Stirnrad
- 47: Stirnrad
- 48: Zahnrad
- 49: Dauerbremseinrichtung
- 50: Zahnrad
- 51: Dauerbremseinrichtung
- 52: Dauerbremseinrichtung
- 53: Hydrostatischer Retarder
- 54: Hydrostatischer Retarder

## Patentansprüche

1. Dauerbremseinrichtung (1; 29; 36; 49; 51; 52) für einen Antriebsstrang eines Kraftfahrzeuges, umfassend mindestens einen einem Kraftfahrzeuggetriebe nachgeschalteten Retarder, welcher über je eine zwischenliegende Hochtreiberstufe (14) an eine abtriebsseitige Komponente des Kraftfahrzeuggetriebes angebunden ist, **dadurch gekennzeichnet, dass** die je eine Hochtreiberstufe (14) ein Abtriebsrad (15) umfasst, welches drehfest mit der abtriebsseitigen Komponente verbunden ist und mit einem Zwischenrad (16) im Zahneingriff steht, das wiederum mit je einem auf jeweils einer Antriebswelle (19, 20; 30, 31) des mindestens einen Retarders platzierten Antriebsrad (17, 18) kämmt.

2. Dauerbremseinrichtung (1; 29; 36; 49; 51; 52) nach Anspruch 1, **dadurch gekennzeichnet, dass** mehrere Retarder vorgesehen sind, deren Antriebsräder (17, 18) jeweils mit einem gemeinsamen Zwischenrad (16) im Zahneingriff stehen, das mit ebenfalls einem gemeinsamen mit der abtriebsseitigen Komponente verbundenen Abtriebsrad (15) kämmt.

3. Dauerbremseinrichtung (1; 29; 36; 49; 51; 52) nach Anspruch 1, **dadurch gekennzeichnet, dass** eine das Zwischenrad (16) tragende Welle (25) und/oder die jeweils eine Antriebswelle (19, 20; 30, 31) jeweils einen Anschluss (26, 27, 28) für einen Nebenabtrieb aufweist.

4. Dauerbremseinrichtung (1; 29; 36; 49; 51; 52) nach Anspruch 1, **dadurch gekennzeichnet, dass** der mindestens eine Retarder als hydrodynamischer Retarder (2, 3; 32, 33; 37, 38) ausgeführt ist.

5. Dauerbremseinrichtung (36; 49; 51; 52) nach Anspruch 4, **dadurch gekennzeichnet, dass** sich der mindestens eine Retarder (37, 38) aus je zwei Rotoren (39, 40, 41, 42) zusammensetzt, von welchen der jeweils eine Rotor (40, 42) auf der Antriebswelle (19, 20) angeordnet und der jeweils andere Rotor (39, 41) mit einer antriebsseitigen Komponente oder der abtriebsseitigen Komponente gekoppelt ist.

6. Dauerbremseinrichtung (36; 49; 51; 52) nach Anspruch 5, **dadurch gekennzeichnet, dass** der jeweils andere Rotor (39, 41) auf je einer Welle (43, 44) platziert ist, welche jeweils ein Stirnrad (46, 47) trägt, das mit einem drehfest mit der antriebsseitigen oder der abtriebsseitigen Komponente verbundenen Zahnrad (48; 50) kämmt.

7. Dauerbremseinrichtung (36; 49; 51; 52) nach Anspruch 2 und 6, **dadurch gekennzeichnet, dass** die mit den jeweils anderen Rotoren (39, 41) der mehreren Retarder drehfest verbundenen Stirnräder (46, 47) mit einem gemeinsamen Zahnrad (48; 50) kämmen, das mit der antriebsseitigen oder der abtriebsseitigen Komponente verbunden ist.

8. Dauerbremseinrichtung (29; 51; 52) nach Anspruch 1, **dadurch gekennzeichnet, dass** der mindestens eine Retarder als hydrostatischer Retarder (34, 35; 53, 54) ausgeführt ist.

9. Dauerbremseinrichtung (29; 51; 52) nach Anspruch 2, **dadurch gekennzeichnet, dass** einem Retarder je ein weiterer Retarder nachgeschaltet ist.

10. Antriebsstrang eines Kraftfahrzeuges, insbesondere eines Nutzfahrzeuges, umfassend eine Dauerbremseinrichtung (1; 29; 36; 49; 51; 52) nach einem der Ansprüche 1 bis 9.
